Europäisches Patentamt

European Patent Office

Office européen des brevets

(19)

(11) **EP 1 659 748 A1**

(12) **EUROPEAN PATENT APPLICATION**

(43) Date of publication:
**24.05.2006 Bulletin 2006/21**

(51) Int Cl.:
**H04L 25/03** *(2006.01)*

(21) Application number: **04405722.2**

(22) Date of filing: **22.11.2004**

(84) Designated Contracting States:
**AT BE BG CH CY CZ DE DK EE ES FI FR GB GR
HU IE IS IT LI LU MC NL PL PT RO SE SI SK TR**
Designated Extension States:
**AL HR LT LV MK YU**

(71) Applicant: **ABB RESEARCH LTD.
8050 Zürich (CH)**

(72) Inventor: **Dzung, Dacfey
5430 Wettingen (CH)**

(74) Representative: **ABB Patent Attorneys
c/o ABB Schweiz AG
Brown Boveri Strasse 6
5400 Baden (CH)**

(54) **Method for determining an optimum pulse shape for data transmission**

(57) The present invention is concerned with the transmission of isochronous or anisochronous data by applying an isochronous design, and achieves good spectral and time domain properties even for aniso- chronous data transmission. A transmit pulse for filtering the data symbols is optimized by considering both spectral and temporal criteria. The latter are weighted by a weighting parameter that is adjustable.

Fig. 1

EP 1 659 748 A1

**Description**

FIELD OF THE INVENTION

The invention relates to the field of isochronous or anisochronous data transmission. It relates to a method of determining an optimum pulse shape of a transmit pulse and a system for transmitting isochronous or anisochronous data symbols.

BACKGROUND OF THE INVENTION

Data transmission is termed *anisochronous* if the bit duration is not constant, but jitters around a nominal value due to clock inaccuracies or timing jitter. The input bit stream is thus represented by a time-continuous binary-valued signal, composed of a sequence of rectangular pulses of slightly varying length. A data transmission system may transfer this time-continuous signal transparently, i.e. without attempting to recover any bit timing at the sender and leaving the actual bit synchronization to the receiver. Such transparent data transmission can be done by direct frequency modulation, or by oversampling and transmission at a multiple bit rate, or by a modified phase modulation as disclosed e.g. in EP-A 1 335 549.
Modem digital transmission systems operate in *isochronous* fashion with constant bit duration. John G. Proakis, Digital Communications. McGraw-Hill, 1995, (Section 9.2.1 "Design of band-limited signals for no-intersymbol interference") e.g. describes the design of such systems, in particular the design of pulses with desirable properties in the Fourier spectrum and in the time domain. In particular, a spectral square root raised cosine (RRC) pulse is found to have good spectral properties and no inter symbol interference (ISI) in case of isochronous transmission and infinite pulse length. Nevertheless, a receiver of isochronous data is prone to synchronisation inaccuracies and/or receiver timing jitter of the symbol synchronizer responsible for sampling the received signal at the correct instants. In addition, the aforementioned pulses lead to high ISI if used in anisochronous systems, i.e. if said symbol sampling must occur at varying time intervals.

DESCRIPTION OF THE INVENTION

It is therefore an objective of the invention to reduce the effect of synchronisation inaccuracies in isochronous data transmission as well as the inter symbol interference ISI in anisochronous data transmission while keeping good spectral properties. This objective is achieved by a method of determining an optimum pulse shape of a transmit pulse and a system for transmitting isochronous or anisochronous data symbols according to the claims 1 and 8, respectively. Further preferred embodiments are evident from the dependent patent claims.
According to the invention, the aforementioned effects are reduced by suitably designing the shape of the transmit pulse used in the transmit pulse filter. An objective function taking into account both a spectral and a temporal criterion depending on the shape of the transmit pulse is established, and the optimum pulse shape is deduced as the pulse shape that optimizes the objective function. The pulse shape is represented by a set of pulse parameters, preferably comprising L time-discrete samples or coefficients of a digital finite impulse response filter.
Preferably, the spectral criterion aims at minimizing the out-of-band power, while the temporal criterion aims at minimizing inter symbol interference. The corresponding parameters, i.e. the bandwidth B and the synchronization window WΔ delimiting the range of relevant time or sampling index shifts between two interfering symbols due to receiver timing jitter or fluctuating symbol duration , can be adjusted within certain limits in order to ensure a meaningful and consistent optimization procedure.
In an advantageous embodiment, the relative weight of the spectral and a temporal criterion is represented by a weighting parameter that likewise can be regarded as an adjustable parameter of the optimization procedure.
In order to facilitate the computational effort, the number of pulse parameters is reduced by restricting the optimum transmit pulse to symmetric shapes, and the optimization procedure is carried out iteratively, departing from a pulse shape that already satisfies, at least approximately, one of the two criteria.

BRIEF DESCRIPTION OF THE DRAWINGS

The subject matter of the invention will be explained in more detail in the following text with reference to preferred exemplary embodiments that are illustrated in the attached drawings, of which:

Fig.1    schematically shows the components of a transmitter and a receiver,
Fig.2    depicts three pulse shapes a), b) c) in the time domain,
Fig.3    depicts the corresponding auto-correlation of the three pulse shapes,

Fig.4    depicts the corresponding power spectral densities of the three pulse shapes, and
Fig.5    depicts the corresponding eye diagrams of the three pulse shapes.

The reference symbols used in the drawings, and their meanings, are listed in summary form in the list of reference symbols. In principle, identical parts are provided with the same reference symbols in the figures.

DETAILED DESCRIPTION OF PREFERRED EMBODIMENTS

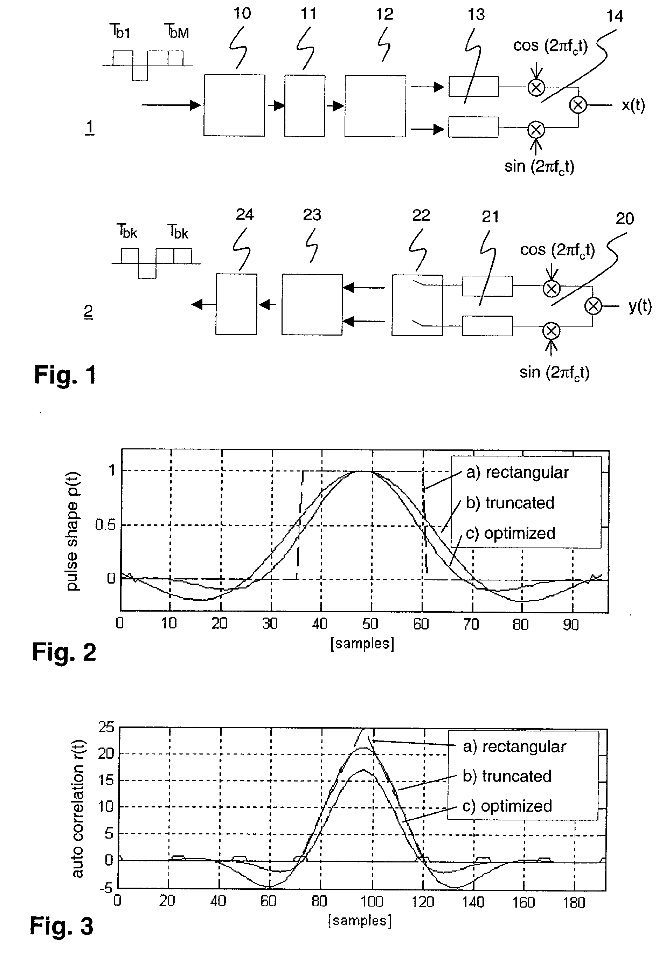

Fig.1 shows the block diagram of a system transmitting anisochronous data as considered in this invention. In a transmitter 1, a bit sampler 10 determines the bit values from the incoming anisochronous, time-continuous binary-valued signal, assuming that the individual bit durations $T_{bk}$ are close to their nominal value $T_b$. In practice, this may be implemented e.g. by an early-late gate. M successive bits are jointly mapped to a digital $2^M$-ary symbol $D_k$ in a serial-to-parallel converter 11 and a mapper 12. The latter assigns a generally complex symbol $D_k$. to the M bits according to a mapping scheme such as $2^M$QAM (Quadrature Amplitude Modulation) or, as a special case thereof, $2^M$DPSK (Differential Phase Shift Keying) modulation, which does not require phase synchronization at the receiver. The duration of the symbol $D_k$ is $T_k = T_{b1} + T_{b2} + .. + T_{bM}$. The sequence of $2^M$-ary symbols is then processed in standard isochronous fashion, by separating real and imaginary part, filtering or shaping, in a transmit pulse filter 13, with a pulse p(t) to generate the transmission spectrum and finally up-mixing, in a frequency shifter 14, to some carrier frequency $f_c$.
The transmitted signal x(t) is represented as a sequence of complex-valued symbols $D_k$ at time instants $t_k$, filtered by the shaping pulse p(t), i.e.

$$x(t) = \sum_k D_k\, p(t - t_k) \tag{1}$$

In the case of isochronous transmission with symbol duration T, $t_k = kT$, while in the anisochronous case with nominal symbol duration T the instantaneous symbol duration is

$$T_k \triangleq t_k - t_{k-1} = T + \Delta T_k \tag{2}$$

where $|\Delta T_k|/T$ may be in the order of 10%.
At the receiver 2, the received signal is down-mixed, by frequency shifter 20, and filtered by the pulse filter 21 matched to the transmit filter 13, sampled at $t_k$ by symbol sampler 22, and then de-mapped from $2^M$-ary symbols to M bits in de-mapper 23. These are then output serially as M bits, each with duration $T_{bk} = T_k/M$ by bit serializer 24.
The anisochronous transmission system above is an obvious modification of the standard isochronous data transmission system. However, the standard pulses with good properties in the frequency domain for isochronous transmission such as the so-called raised cosine pulses (RC) lead to high intersymbol interference (ISI) if used in anisochronous systems, i.e. if symbol sampling at the receiver must occur at varying intervals $T_k$. Therefore, in the following, a pulse p(t) applicable to the transmission of anisochronous symbols and with optimized properties in the spectral or frequency domain as well as in the time domain (ISI) is derived.
The optimized time-continuous pulse p(t) of length $LT_s$ is determined by a vector of L equidistant samples $\underline{p}$ = $[p_0, p_1, .. p_{L-1}]'$ with $p_n = p(nT_s)$, where $1/T_s$ is the sampling frequency. Its auto-correlation r(s) given by

$$r(s) = \int_0^{LT_s} p^*(\tau)p(s+\tau)d\tau \ \text{ or } \ r_s = \sum_{\tau=0}^{L-1} p_\tau^* p_{s+\tau} \tag{3}$$

in time-continuous and sampled representation, respectively
<u>Spectral criterion:</u> The power spectral density of the transmitted signal x(t), for an average symbol rate 1/T, is approximated as

$$\Phi(f) = \frac{1}{T}\left|P(f)\right|^2 \sigma_D^2 \ , \tag{4}$$

where

$$P(f) = \sum_{n=0}^{L-1} p_n e^{-j2\pi f n T_s} \tag{5}$$

is the Fourier transform of the sampled pulse $p_n = p(nT_s)$, and

$$\sigma_D^2 = \sum_{k=1}^{N}\left|D_k^2\right|\frac{1}{N}$$

is the average power of the signal $D_k$. Typically $T_s = T/m$, where $m$ ($\gg 1$) is the oversampling factor. The energy of $[p_0, p_1, .. p_{L-1}]$ within a frequency band $[-B, +B]$ is

$$T_s \int_{-B}^{B}\left|P(f)\right|^2 df = T_s \sum_n \sum_\ell p_\ell^*\left(\int_{-B}^{B} e^{-2\pi f(n-\ell)T_s} df\right) p_n = \underline{p}^+ S\, \underline{p}\ , \tag{6}$$

where S is a positive-definite symmetric Toeplitz matrix with elements

$$S_{\ell n} = 2BT_s \frac{\sin\left(2\pi B(n-\ell)T_s\right)}{2\pi B(n-\ell)T_s} , \tag{7}$$

and $\underline{p}$ is the vector $\underline{p} = [p_0, p_1, .. p_{L-1}]'$. Eqn.(6) is normalized such that for $BT_s = \frac{1}{2}$ there results the total energy $r_0 = \underline{p}^+ \cdot \underline{p}$. The relative integrated out-of-band power of the transmitted signal is then

$$\rho_{OB} \triangleq 1 - \frac{T_s \int_{-B}^{B}\left|P(f)\right|^2 df}{r_0} = 1 - \frac{\underline{p}^+ S\, \underline{p}}{\underline{p}^+\, \underline{p}} , \tag{8}$$

and $\rho_{OB}$ should be minimized in order to minimize interference to out-of-band systems. The bandwidth parameter B is typically in the order of the symbol rate $1/T$, i.e. $B \approx 1/T$ ($\ll 1/T_s$). Alternatively, the relative peak or maximum out-of-band power $|P(f)|$ of the transmitted signal could be minimized.

Time domain criterion: The received signal is attenuated by a factor $\alpha$ and has additive noise n(t),

$$y(t) = \alpha x(t) + n(t) \tag{9}$$

For white noise n(t), the optimum receiver first filters y(t) by a matched filter $\tilde{p}(t)$ that is equal to the transmit filter $p(t)$ if $p(t)$ is symmetric and real valued, and in general given by

$$\widetilde{p}(t) = p^*(-t)$$

Assuming that carrier synchronization (carrier phase compensation) and symbol synchronization (delay compensation by $LT_s$) have been performed before, the received signal is sampled at time instants $t_k$ synchronized to the sender, to yield

$$\hat{y}(t_k) = \left. \int_0^{LT_s} \widetilde{p}(\tau) y(t-\tau) d\tau \right|_{t=t_k} \tag{10}$$

Inserting eqn.(9), eqn.(1) and eqn.(3) gives

$$\hat{y}(t_k) = \alpha D_k r(0) + \alpha \sum_{\substack{\ell \\ \ell \neq k}} D_\ell r(t_k - t_\ell) + \hat{n}(t_k) \tag{11}$$

where r(s) is the auto-correlation of the pulse p(t) defined above and $\hat{n}(t_k)$ is the filtered noise sample

$$\hat{n}(t_k) = \left. \int_0^{LT_s} p(\tau) n(t+\tau) d\tau \right|_{t=t_k} \tag{12}$$

From eqn.(11) it is seen that the sequence of received symbols entering the symbol detector consists of the wanted signal with power

$$C = \alpha^2 \sigma_D^2 \, r^2(0), \tag{13}$$

additive interference from neighboring symbols (Inter Symbol Interference ISI) with power

$$I_{ISI} = \alpha^2 \sum_{\substack{\ell \\ \ell \neq k}} \sigma_D^2 \, r^2(kT - \ell T + \Delta T_{k\ell}) \tag{14}$$

where $\Delta T_{kl}$ denotes the deviation of the sampling time difference $t_k - t_l$ from multiples of the nominal symbol duration T, and, using eqn.(2), additive noise with power

$$N = \sigma_n^2 \, r(0) \, . \tag{15}$$

The ISI-to-signal power ratio is thus

$$\frac{I_{ISI}(\Delta T)}{C} = \frac{\sum\limits_{\ell,\ell\neq 0} r^2(\ell T + \Delta T)}{r^2(0)} \quad , \qquad (16)$$

where $\Delta T$ is the synchronization time representing the range of relevant $\Delta T_{kl}$ in eqn.(14), i.e. the time shift between an interfering symbol ($D_l$) and a wanted symbol ($D_k$) due to receiver timing jitter or fluctuating symbol duration.

Total optimization criterion: The optimum pulse shape according to the present invention combines the out-of-band spectrum criterion $\rho_{OB}$ eqn.(8) and the intersymbol interference criterion $I_{ISI}/C$ eqn.(16) to the total criterion or objective function

$$J(\underline{p}) = \rho_{OB} + \gamma\frac{I_{ISI}}{C} = (1 - \frac{\underline{p}^+ S\, \underline{p}}{r_0^2}) + \gamma\cdot\frac{\sum\limits_{\ell,\ell\neq 0}\sum\limits_{\Delta}^{W\Delta} r_{\ell m+\Delta}^2}{r_0^2} \quad , \qquad (17)$$

to be *minimized with respect to* $\underline{p} = [p_0, p_1, .. p_{L-1}]$'. The parameter $\gamma$ adjusts the weight between the opposing spectral and time domain criteria. The summation index $\Delta$ is comprised within an interference, correlation or synchronization window $W\Delta$ for which ISI in the anisochronous operation is relevant. The auto-correlation $r_s$ is given above in eqn.(3). In a sampled representation, m is the oversampling factor defined below together with the sampling time $T_s$, such that $(lm + \Delta)T_S = \ell\, T + \Delta T$. The width of the synchronization window $W\Delta$, i.e. the range of the aforementioned summation indices $\Delta$, is an adaptable optimization parameter, as are the parameter $\gamma$, the length L of the pulse and the reference bandwidth B appearing in the matrix S of eqn.(7).

The criterion (17) generalizes the known pulse shaping which only considers the spectral criterion $\rho_{OB}$ for optimization. The generalization is in particular applicable to anisochronous transmission with a width of the synchronization window $W\Delta \neq 0$, and the weighted criterion (17) allows a compromise between spectral and time domain, without overly restricting admissible pulses.

In order to evaluate the criterion (17) numerically, an iterative procedure starting from a known pulse shape with partly optimized properties, such as a truncated raised cosine (RC), appears most beneficial. The number of variables in $\underline{p} = [p_0, p_1, .. p_{L-1}]$' for the optimization is halved by restricting $\underline{p}$ to real symmetric vectors, i.e. $p_0 = p_{L-1}$, $p_1 = p_{L-2}$, $p_2 = p_{L-3}$, etc. This reduces computational effort, and facilitates convergence of the iterative numerical optimization. It can be shown that for optimization with respect to the spectral criterion $\rho_{OB}$ only ($\gamma = 0$ in (17)), this symmetry restriction is without loss of generality: The minimum of the Rayleigh coefficient $\rho_{OB}$ (7) is achieved by the eigenvector to the corresponding eigenvalue of S, and eigenvectors of Toeplitz matrices S are symmetric {or anti-symmetric}. It is conjectured that even for the general case (17) the symmetry restriction is admissible without loss of generality.

In an example of the optimization according to the criterion (17), an anisochronous transmission system with nominal symbol rate $1/T = 3.2$ ksymb/s is considered, with pulses of length L = 97 variables or samples, sampled at rate $1/T_s = 76.8$ kHz (i.e. oversampling factor m = 24, pulse duration = 4 times nominal symbol duration T). The reference bandwidth for out-of-band power is B = 1/T, and ISI due to timing jitter in the range of $-2 \leq \Delta \leq +2$ summation indices or sampling index shifts, i.e. within a synchronization window $W\Delta$ of width 5, is to be minimized. The numerical optimization was performed using the MATLAB™ function fminsearch, with the L/2 free variables $[p_0, p_1, .. p_{47}]$ (and $p_{48} = 1$, and from symmetry, $p_{96} = p_0$, $p_{95} = p_1$, .., $p_{49} = p_{47}$.) For this example, a value of $\gamma = 0.02$ for the weighting parameter $\gamma$ was found by trial and error to produce good results.

Fig.2 shows pulses applicable to the specified transmission system. The rectangular pulse of length T (line a)) is the most basic shape. A spectral square root raised cosine RRC pulse is the standard choice as detailed above, having good spectral properties and no ISI in case of isochronous transmission and infinite pulse length. The MATLAB™ function rcosfir produces a truncated RRC pulse, shown also in Fig.2 (line b)). This pulse is used as the initialization value required by the iterative optimization function fminsearch. After 500·L/2 iterations, the optimized pulse (line c)) in Fig.2 results.

Fig.3 plots the auto-correlation r(s) of the pulses, i.e. the signal form seen after the matched filter 21 in the receiver 2. Also, the correlation window considered relevant for ISI is indicated by the bumps of unit height and of width $\pm 2$ samples, centered at multiples of m = 24. The width corresponds to the ISI-parameter $\Delta$, and it can be seen that the optimized pulse has small correlation values at these positions. Thus, the optimized pulse is indeed a considerable improvement over the original truncated RRC pulse.

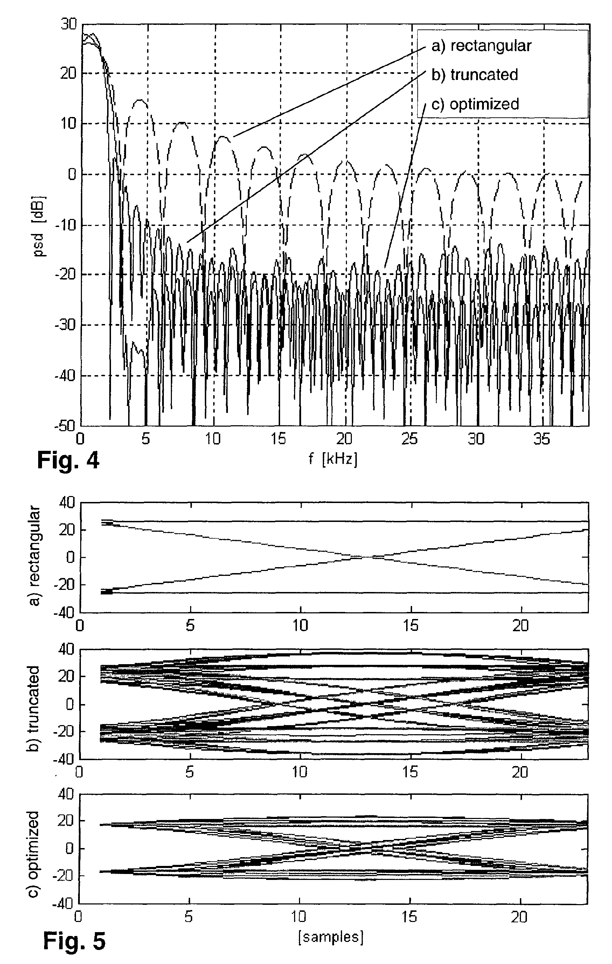

Fig.4 shows the transmit spectrum before up-mixing to the carrier frequency $f_c$ and assuming a constant symbol duration T. Fig.4 confirms the improvement by the optimized pulse over the well-known RRC pulse, as obviously less out-of-band power, i.e. power assigned to frequencies adjacent to the bandwidth B=3.2 kHz, is transmitted. As the optimization criterion considered the integrated (and not the peak-) out-of-band power, the spectrum of the optimized pulse may thus surpass the other spectra at certain frequencies.

Fig.5 finally shows an "eye diagram", i.e. the plot of y(t) modulo T, as a measure of the ISI at the receiver for the case of binary amplitude shift keying. Fig.5. shows the superiority of the optimized pulse over the RRC pulse, as at sample 24 (right-hand end of the diagram), the amplitude of y(t) is much less scattered. In consequence, a jitter in the synchronization window of width $\pm 2$ samples due to the varying symbol duration $T_k$ is much less likely to lead to a confusion between the two binary amplitudes as in the case of an RRC pulse.

LIST OF DESIGNATIOINS

| | |
|---|---|
| 1 | transmitter |
| 10 | bit sampler |
| 11 | serial-to-parallel converter |
| 12 | mapper |
| 13 | transmit pulse filter |
| 14 | frequency shifter |
| 2 | receiver |
| 20 | frequency shifter |
| 21 | pulse filter |
| 22 | symbol sampler |
| 23 | de-mapper |
| 24 | bit serializer |

**Claims**

1. A method of determining an optimum pulse shape $\underline{p}^*$ of a transmit pulse for transmission of data symbols $D_k$, wherein a pulse shape $\underline{p}$ is parameterized by a set of L pulse parameters $[p_0, p_1, .. p_{L-1}]$, comprising

   - setting up an objective function $J(\underline{p})$ depending on the pulse parameters $[p_0, p_1, .. p_{L-1}]$ as a sum of a frequency domain criterion $\rho_{OB}$ and a time domain criterion $I_{ISI}/C$, and
   - optimizing the objective function J and deducing the optimum pulse shape $\underline{p}^*$.

2. The method according to claim 1, **characterized in that** the frequency domain criterion $\rho_{OB}$ penalizes out-of-band power transmitted beyond a preferred power band of bandwidth B.

3. The method according to claim 1, **characterized in that** the time-domain criterion $I_{ISI}/C$ depends on the auto-correlation r(s) of the pulse shape $\underline{p}$ and penalizes inter symbol interference due to anisochronous transmission or receiver timing jitter occurring within a synchronization window $W\Delta$.

4. The method according to claim 1, **characterized in that** a weighting parameter $\gamma$ determines the relative weight of the frequency domain criterion $\rho_{OB}$ and the time domain criterion $I_{ISI}/C$.

5. The method according to claim 4, **characterized in that** the weighting parameter $\gamma$ is an adjustable parameter of the optimization procedure.

6. The method according to claim 1, **characterized in that** the optimization of the objective function J is an iterative procedure.

7. The method according to claim 1, **characterized in that** the pulse shape $\underline{p}$ is restricted to be symmetric.

8. A system for transmitting data symbols $D_k$ from a transmitter (1) to a receiver (2), wherein the transmitter (1) comprises a transmit pulse filter (13) for filtering the symbols $D_k$ with a transmit pulse,

**characterized in that** in the transmit pulse has a pulse shape $\underline{p}^*$ parameterized by a set of L pulse parameters [$p_0$, $p_1$, .. $p_{L-1}$] that optimizes an objective function $J(\underline{p})$ depending on the pulse parameters [$p_0$, $p_1$, .. $p_{L-1}$] and being a sum of a frequency domain criterion $\rho_{OB}$ and a time domain criterion $I_{ISI}/C$.

9. The system according to claim 8, **characterized in that** the time domain criterion $I_{ISI}/C$ depends on the auto-correlation $r(s)$ of the pulse shape $\underline{p}$ and penalizes inter symbol interference due to anisochronous transmission occurring within a synchronization window $W\Delta$.

10. The system according to claim 8, **characterized in that** the pulse shape $\underline{p}^*$ is restricted to be symmetric.

**Fig. 1**

**Fig. 2**

**Fig. 3**

Fig. 4

Fig. 5

**European Patent Office**

## EUROPEAN SEARCH REPORT

Application Number

EP 04 40 5722

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99/38298 A (NOKIA MOBILE PHONES LIMITED; LOBO, NATIVIDADE, ALBERT) 29 July 1999 (1999-07-29) * page 6, line 1 - line 4 * * page 9, line 25 - line 27 * * page 10, line 17 - line 18 * * page 13, line 26 - line 27 * * claims 1-6 * ----- | 1,2,4-6, 8 | H04L25/03 |
| X | DATABASE INSPEC [Online] THE INSTITUTION OF ELECTRICAL ENGINEERS, STEVENAGE, GB; October 1987 (1987-10), SARAMAKI T ET AL: "A class of FIR Nyquist (Nth-band) filters with zero intersymbol interference" XP002328114 Database accession no. 3052928 * abstract * & IEEE Transactions on Circuits and Systems USA, vol. CAS-34, no. 10, October 1987 (1987-10), pages 1182-1190, ISSN: 0098-4094 * page 1183, paragraph III - page 1186, paragraph IV.B * ----- | 1,2,6-8, 10 | |
| X | RAMESH R ET AL: "Spectral shaping using coded modulation for mobile radio" UNIVERSAL PERSONAL COMMUNICATIONS, 1992. ICUPC '92 PROCEEDINGS., 1ST INTERNATIONAL CONFERENCE ON DALLAS, TX, USA 29 SEPT.-1 OCT. 1992, NEW YORK, NY, USA,IEEE, US, 29 September 1992 (1992-09-29), pages 298-302, XP010061047 ISBN: 0-7803-0591-4 page 300, paragraph with title "Case 2..." to page301, left-hand column, paragraph 3 ----- -/-- | 1,2,8 | |

TECHNICAL FIELDS SEARCHED (Int.Cl.7)

H04L

The present search report has been drawn up for all claims

| Place of search | Date of completion of the search | Examiner |
|---|---|---|
| Munich | 13 May 2005 | Schiffer, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**European Patent Office**

**EUROPEAN SEARCH REPORT**

Application Number

EP 04 40 5722

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 737 969 A (STEEL ET AL) 12 April 1988 (1988-04-12) * column 3, line 57 - line 61 * * column 4, line 5 - line 15 * * column 4, line 33 - line 36 * * claims 3,4 * | 1-10 | |
| A | DATABASE INSPEC [Online] THE INSTITUTION OF ELECTRICAL ENGINEERS, STEVENAGE, GB; August 1982 (1982-08), CHEVILLAT P R ET AL: "Optimum FIR transmitter and receiver filters for data transmission over band-limited channels" XP002328115 Database accession no. 1952371 * abstract * & IEEE Transactions on Communications USA, vol. COM-30, no. 8, August 1982 (1982-08), pages 1909-1915, ISSN: 0090-6778 * the whole document * | 1-10 | |

**TECHNICAL FIELDS SEARCHED (Int.Cl.7)**

The present search report has been drawn up for all claims

| Place of search | Date of completion of the search | Examiner |
|---|---|---|
| Munich | 13 May 2005 | Schiffer, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

**EP 1 659 748 A1**

## ANNEX TO THE EUROPEAN SEARCH REPORT
## ON EUROPEAN PATENT APPLICATION NO.

EP 04 40 5722

13-05-2005

| Patent document cited in search report | | Publication date | Patent family member(s) | | Publication date |
|---|---|---|---|---|---|
| WO 9938298 | A | 29-07-1999 | AU | 2176499 A | 09-08-1999 |
| | | | AU | 2176599 A | 09-08-1999 |
| | | | AU | 2176699 A | 09-08-1999 |
| | | | CN | 1294803 A ,C | 09-05-2001 |
| | | | CN | 1294807 A | 09-05-2001 |
| | | | CN | 1294804 A | 09-05-2001 |
| | | | EP | 1050139 A1 | 08-11-2000 |
| | | | EP | 1050142 A2 | 08-11-2000 |
| | | | EP | 1050140 A1 | 08-11-2000 |
| | | | GB | 2350762 A | 06-12-2000 |
| | | | GB | 2349317 A | 25-10-2000 |
| | | | GB | 2349318 A | 25-10-2000 |
| | | | GB | 2337670 A ,B | 24-11-1999 |
| | | | GB | 2333673 A | 28-07-1999 |
| | | | GB | 2333674 A ,B | 28-07-1999 |
| | | | WO | 9938297 A1 | 29-07-1999 |
| | | | WO | 9938300 A2 | 29-07-1999 |
| | | | WO | 9938298 A1 | 29-07-1999 |
| | | | JP | 2002502148 T | 22-01-2002 |
| | | | JP | 2002502149 T | 22-01-2002 |
| | | | JP | 2002502150 T | 22-01-2002 |
| US 4737969 | A | 12-04-1988 | AT | 104491 T | 15-04-1994 |
| | | | DE | 3889106 D1 | 19-05-1994 |
| | | | DE | 3889106 T2 | 13-10-1994 |
| | | | EP | 0345282 A1 | 13-12-1989 |
| | | | JP | 1503267 T | 02-11-1989 |
| | | | JP | 5031339 B | 12-05-1993 |
| | | | WO | 8805983 A1 | 11-08-1988 |

EPO FORM P0459